# EUROPÄISCHE PATENTSCHRIFT

(11) **EP 3 282 231 B1**
(45) Veröffentlichungstag und Bekanntmachung des Hinweises auf die Patenterteilung: **03.04.2019**
(21) Anmeldenummer: 16183175.5
(22) Anmeldetag: 08.08.2016
(51) Int. Cl.: G01F 23/284, B64C 39/02, G01F 22/00, G01F 23/296

(54) **FÜLLSTANDMESSGERÄT FÜR SCHÜTTHALDEN**
FILL LEVEL METER FOR MATERIAL HEAPS
APPAREIL DE MESURE DU NIVEAU DE REMPLISSAGE DE DISPOSITIFS DE STOCKAGE DE PRODUITS EN VRAC

(43) Veröffentlichungstag der Anmeldung: 14.02.2018
(73) Patentinhaber: VEGA Grieshaber KG, 77709 Wolfach (DE)
(72) Erfinder: WELLE, Roland, 77756 Hausach (DE)
(74) Vertreter: Maiwald Patent- und Rechtsanwaltsgesellschaft mbH

(56) Entgegenhaltungen:
- EP-A2- 1 895 472
- WO-A1-2015/124202
- CN-A- 104 006 743
- CN-A- 104 279 955
- CN-U- 202 600 150
- CN-U- 203 981 109
- DE-A1-102012 216 162
- US-A- 5 170 171

## Beschreibung

### Gebiet der Erfindung

Die Erfindung betrifft die Füllstandmessung. Insbesondere betrifft die Erfindung ein Füllstandmessgerät zum Ermitteln einer Füllhöhe und/oder einer Topologie eines Schüttguts, eine Messanordnung mit einem solchen Füllstandmessgerät, ein Verfahren zum Ermitteln einer Füllhöhe eines Schüttguts, ein Programmelement für ein Füllstandmessgerät sowie ein computerlesbares Medium mit einem solchen Programmelement.

### Technischer Hintergrund der Erfindung

Schüttgüter, welche in einem Behälter oder auf einer Schüttguthalde gelagert sind, weisen im Regelfall eine unebene Oberfläche auf. Insbesondere kann es zur Ausbildung eines Schüttgutkegels und/oder eines Abzugstrichters kommen.

Wird mit einem Füllstandmessgerät lediglich zu einem Punkt einer Oberfläche des Schüttguts ein Abstand und somit nur an einem Punkt eine Füllhöhe des Schüttguts ermittelt, so kann der Füllstand regelmäßig nur ungenau bestimmt werden. Bekannte Füllhöhen von Schüttgütern erfassende, insbesondere Topologie erfassende, Füllstandmessgeräte vermessen die Oberfläche einer Schüttguthalde häufig durch das Aussenden und Empfangen von Radarsignalen von oben herab auf die Oberfläche des Schüttguts. Derartige Füllstandmessgeräte können daher eine mechanische Befestigungsvorrichtung oberhalb der Schüttguthalde erfordern. Dies kann zur Folge haben, dass bei offenen Schüttguthalden außerhalb von Behältern zumindest eine mechanisch aufwändige und somit auch teure Befestigungsvorrichtung an der Messstelle bzw. der Schüttguthalde installiert werden muss. Bei räumlich ausgedehnten Schüttguthalden werden ferner aufgrund einer begrenzten Fläche des überwachten und/oder vermessenen Gebietes unterhalb eines Füllstandmessgerätes im Allgemeinen mehrere Füllstandmessgeräte notwendig.

Dokument CN 104 279 955 A betrifft die Vermessung eines Kohle-Depots eines Kraftwerks mit einer Drohne und/oder einem vierachsigen Fluggerät. Dazu weist die Drohne eine Laser-Abstandsmessvorrichtung auf, mit welcher an mehreren Positionen oberhalb eines Kohlehaufens ein Abstand zwischen Drohne und Oberfläche des Kohlehaufens ermittelt wird.

### Zusammenfassung der Erfindung

Es ist eine Aufgabe der Erfindung, ein Füllstandmessgerät bereitzustellen, mit welchem kosteneffizient, schnell, großflächig und zuverlässig eine Füllhöhe eines Schüttguts ermittelt werden kann, insbesondere auf einer offenen Schüttguthalde.

Diese Aufgabe wird durch die Merkmale der unabhängigen Ansprüche gelöst. Weiterbildungen der Erfindung ergeben sich aus den abhängigen Ansprüchen und der nachfolgenden Beschreibung.

Ein Aspekt der Erfindung betrifft ein Füllstandmessgerät zum Ermitteln einer Füllhöhe eines Schüttguts, insbesondere eines Schüttguts auf einer offenen

Schüttguthalde. Das Füllstandmessgerät weist ein Sende-Empfangsmodul zum Aussenden eines Sendesignals und zum Empfangen eines an einer Oberfläche des Schüttguts reflektierten Signals auf. Weiter weist das Füllstandmessgerät eine Steuereinheit auf, welche dazu eingerichtet ist, basierend auf dem Sendesignal und dem reflektierten Signal, beispielsweise anhand eines Laufzeitverfahrens, einen Abstand des Füllstandmessgeräts zur Oberfläche des Schüttguts und/oder eine Füllhöhe des Schüttguts zu ermitteln. Ferner weist das Füllstandmessgerät ein Flugantriebsmodul zum Positionieren des Füllstandmessgeräts oberhalb des Schüttguts auf. Insbesondere kann das Flugantriebsmodul dazu eingerichtet und/oder ausgelegt sein, das Füllstandmessgerät dreidimensional, d.h. in drei zueinander orthogonalen Raumrichtungen, zu positionieren. Die Steuereinheit ist dazu eingerichtet, das Flugantriebsmodul, beispielsweise mittels geeigneter Steuerbefehle, derart zu regeln und/oder zu steuern, dass das Füllstandmessgerät entlang einer Flugbahn eine Mehrzahl von Positionen oberhalb des Schüttguts einnimmt. Ferner ist die Steuereinheit dazu eingerichtet, zumindest an einem Teil der Mehrzahl von eingenommenen Positionen die Füllhöhe und/oder einen Füllhöhenwert des Schüttguts zu ermitteln. Optional kann die Steuereinheit dazu eingerichtet sein, die ermittelte Füllhöhe und/oder den ermittelten Füllhöhenwert in einer Speichervorrichtung des Füllstandmessgeräts zu hinterlegen.

Zusammenfassend wird erfindungsgemäß ein flugfähiges und/oder fliegendes Füllstandmessgerät vorgeschlagen, welches in einem Luftraum oberhalb der Oberfläche des Schüttguts mit dem Flugantriebsmodul in drei Raumrichtungen bewegt und/oder positioniert werden kann, wobei an mindestens einer Position, insbesondere an einer Mehrzahl von Positionen, die Füllhöhe des Schüttguts ermittelt werden kann. Gleichsam kann das Füllstandmessgerät dazu eingerichtet sein, die Füllhöhe des Schüttguts während eines Fluges entlang zumindest einem Teil der Flugbahn zu ermitteln. Das Füllstandmessgerät kann auch an den eingenommenen Positionen schwebend die Füllhöhe ermitteln. Insgesamt kann das Füllstandmessgerät daher ohne mechanische Befestigungsvorrichtung und/oder ohne weitere Montageeinrichtungen Füllhöhen an verschiedenen Positionen auch großflächiger Schüttguthalden ermitteln, so dass kosteneffizient, schnell und zuverlässig die Füllhöhe des Schüttguts an diesen Positionen ermittelt werden kann. Hier und im Folgenden werden die Begriffe Füllhöhe und Füllhöhenwert synonym verwendet, d.h. beispielsweise entspricht ein Ermitteln einer Füllhöhe dem Ermitteln eines Wertes der Füllhöhe bzw. einem Füllhöhenwert und umgekehrt.

Erfindungsgemäß ist das Sendesignal ein Radarsignal. Nicht erfindungsgemäß kann das Sendesignal ein anderes elektromagnetisches Signal, wie beispielsweise ein Lichtpuls und/oder ein Laserpuls, und/oder ein Schallsignal sein. Das Sende-Empfangsmodul kann zum Senden des Sendesignals einen geeigneten Sender und zum Empfangen des reflektierten Signals einen geeigneten Empfänger aufweisen. Insbesondere kann das Sende-Empfangsmodul eine Laserquelle zum Senden des Laserpulses und/oder eine Schallquelle zum Senden des Schallsignals sowie entsprechende Empfänger bzw. Sensoren zum Empfangen der reflektierten Signale aufweisen. Alternativ oder zusätzlich kann das Sende-Empfangsmodul ein Radarmodul und/oder eine Antennenanordnung mit mehreren Antennen zum Senden des Sendesignals und zum Empfangen des reflektierten Signals aufweisen.

Die Steuereinheit kann insbesondere ein Steuermodul, einen Controller, eine Prozessoreinheit und/oder einen Prozessor bezeichnen. Die Steuereinheit kann insbesondere eine Logikvorrichtung zur Datenverarbeitung und/oder Signalverarbeitung aufweisen.

Das Flugantriebsmodul kann allgemein einen Flugantrieb, eine Flugantriebsanordnung und/oder eine Flugantriebseinheit des Füllstandmessgeräts bezeichnen. Das Flugantriebsmodul kann eine Mehrzahl von Antrieben und/oder Aktoren, wie z.B. Elektromotoren mit Propellern, zur Veränderung einer Lage des Füllstandmessgeräts im Raum aufweisen. Insbesondere kann das Flugantriebantriebsmodul einen Quadrocopterantrieb mit vier unabhängig betätigbaren und/oder steuerbaren Elektromotoren mit jeweils einem Propeller bezeichnen. Gleichsam kann das Füllstandmessgerät eine Drohne bezeichnen, welche dazu eingerichtet ist die Füllhöhe des Schüttguts während des Fluges zu ermitteln.

Gemäß einer Ausführungsform weist das Füllstandmessgerät ein Kommunikationsmodul mit einer Kommunikationsschnittstelle zur drahtlosen Kommunikation des Füllstandmessgeräts mit einer Basisstation auf, wobei die Steuereinheit dazu eingerichtet ist, die an den jeweiligen Positionen ermittelten Füllhöhen und/oder Füllhöhenwerte über das Kommunikationsmodul an die Basisstation zu übermitteln, z.B. durch Übermitteln eines mit der jeweiligen Füllhöhe korrelierenden Signals. Das Kommunikationsmodul kann beispielsweise bluetoothbasiert, infrarotbasiert und/oder WLAN-basiert sein.

Gemäß einer Ausführungsform ist die Steuereinheit dazu eingerichtet, die Flugbahn basierend auf einer vorbestimmten, definierbaren, und/oder programmierbaren Startposition und einer Endposition des Füllstandmessgeräts zu ermitteln. Die Startposition und/oder die Endposition kann beispielsweise eine Position der Basisstation bezeichnen.

Gemäß einer Ausführungsform ist das Füllstandmessgerät dazu eingerichtet, über die Kommunikationsschnittstelle Steuerbefehle von einer Basisstation zu empfangen. Beispielsweise kann das Füllstandmessgerät über die Kommunikationsschnittstelle und/oder über das Kommunikationsmodul Steuerbefehle zum Steuern und/oder Regeln des Flugantriebmoduls empfangen.

Gemäß einer Ausführungsform weist das Füllstandmessgerät wenigstens einen Sensor ausgewählt aus der Gruppe bestehend aus Standortbestimmungssensor, GPS-Sensor ("Global Positioning System"), Neigungssensor, Beschleunigungssensor, Drucksensor, Abstandsensor, Gyrosensor und Näherungssensor auf, wobei die Steuereinheit dazu eingerichtet ist, Messwerte des wenigstens einen Sensors zu verarbeiten. Alternativ oder zusätzlich ist die Steuereinheit dazu eingerichtet, unter Berücksichtigung von Messwerten des wenigstens einen Sensors die Füllhöhe des Schüttguts zu ermitteln. Mit anderen Worten kann das Füllstandmessgerät einen oder mehrere weitere Sensoren aufweisen, deren Messwerte zumindest zur Unterstützung der eigentlichen Ermittlung der Füllhöhe verwendet werden können. Auch kann basierend auf den Messwerten des wenigstens einen weiteren Sensors eine Plausibilitätskontrolle für eine Füllhöhenermittlung erfolgen.

Gemäß einer Ausführungsform ist die Steuereinheit dazu eingerichtet, das Flugantriebsmodul derart zu steuern und/oder zu regeln, dass ein vorgegebener Abstand und/oder ein Abstandsbereich des Füllstandmessgeräts zur Oberfläche des Schüttguts entlang der Flugbahn eingehalten wird, wobei die Steuereinheit dazu eingerichtet ist, basierend auf einer Lageänderung des Füllstandmessgeräts entlang der Flugbahn den Füllhöhenwert des Schüttguts zu ermitteln. Mit anderen Worten kann vorgesehen sein, dass durch geeignetes Steuern und/oder Regeln des Flugantriebsmoduls der Abstand des Füllstandmessgeräts zur Oberfläche des Schüttguts im Wesentlichen konstant gehalten ist, und insbesondere über Höhenänderungen des Füllstandmessgeräts die Füllhöhen an den jeweiligen Positionen ermittelt werden. Derartige Lageänderungen und/oder Höhenänderungen können insbesondere mit einem Neigungssensor, einem Beschleunigungssensor, einem GPS-Sensor und/oder jedem anderen geeigneten Sensor bestimmt und/oder ermittelt werden.

Gemäß einer Ausführungsform ist die Steuereinheit dazu eingerichtet, das Flugantriebsmodul derart zu steuern, dass das Füllstandmessgerät innerhalb vorbestimmter Koordinaten und/oder innerhalb eines durch vorbestimmte Koordinaten begrenzten Gebietes die Füllhöhe des Schüttguts ermittelt. Beispielsweise können die Koordinaten in einer Speichervorrichtung des Füllstandmessgeräts hinterlegt sein. Alternativ oder zusätzlich können die Koordinaten über die Basisstation und das Kommunikationsmodul an das Füllstandmessgerät übermittelt werden. Die Koordinaten können etwa geographische oder beliebige andere Koordinaten sein. Beispielsweise können die Koordinaten Eckpunkte eines polygonförmigen Gebietes, welches z.B. eine Schüttguthalde repräsentieren kann, umfassen. Das Füllstandmessgerät und/oder die Steuereinheit kann insbesondere dazu eingerichtet sein, selbständig, automatisch und/oder automatisiert in regelmäßigen Zeitabständen und/oder kontinuierlich entlang der Flugbahn zu prüfen, ob es sich innerhalb des durch die Koordinaten begrenzten Gebietes befindet. Auch kann das Füllstandmessgerät dazu eingerichtet sein, durch Flugrichtungsänderungen das Füllstandmessgerät innerhalb der Koordinaten und/oder des zugehörigen Gebietes zu halten. Mit anderen Worten kann das Füllstandmessgerät dazu eingerichtet sein, automatisch, automatisiert und/oder selbstständig innerhalb der Koordinaten und/oder des durch die Koordinaten festgelegten Gebietes die Füllhöhe zu ermitteln. Das Füllstandmessgerät kann auch dazu eingerichtet sein, in definierbaren, programmierbaren und/oder bestimmbaren Zeitabständen einen Messzyklus zu starten. Insgesamt kann derart ein nahezu vollständig selbstständig arbeitendes Füllstandmessgerät bereitgestellt sein.

Gemäß einer Ausführungsform ist die Steuereinheit dazu eingerichtet, bei einer Lageänderung des Füllstandmessgeräts, eine aktuell ermittelte Füllhöhe zu verwerfen und basierend auf weiteren ermittelten Füllhöhen und/oder durch weitere ermittelte Füllhöhen zu ersetzen. Beispielsweise kann die Steuereinheit dazu eingerichtet sein, bei einer unvorhergesehenen Lageänderung, wie sie etwa durch einen Windstoß hervorgerufen werden kann, die aktuell ermittelte Füllhöhe zu verwerfen. Die Lageänderung kann in diesem Fall allgemein eine Abweichung, insbesondere eine unplanmäßige Abweichung, von der Flugbahn und/oder eine unplanmäßige Bewegung des Füllstandmessgeräts bezeichnen. Die aktuell ermittelte Füllhöhe kann etwa durch Interpolation und/oder Extrapolation weiterer ermittelter Füllhöhenwerte ersetzt werden, insbesondere durch Interpolation einer zeitlich der aktuell ermittelten Füllhöhe vorangehenden und/oder einer zeitlich nachfolgenden Füllhöhe. Insgesamt kann auf diese Weise eine Präzision und/oder Genauigkeit der Füllhöhenermittlung gesteigert werden.

Ein weiterer Aspekt der Erfindung betrifft eine Messanordnung zum Bestimmen einer Füllhöhe eines Schüttguts. Die Messanordnung weist ein Füllstandmessgerät, so wie voranstehend und nachfolgend beschrieben, und eine Basisstation zur Kommunikation mit dem Füllstandmessgerät auf. Beispielsweise kann die Basisstation dazu eingerichtet sein, eine durch das Füllstandmessgerät ermittelte Füllhöhe des Schüttguts zu empfangen und/oder Steuerbefehle zur Steuerung des Füllstandmessgeräts an das Füllstandmessgerät zu übermitteln. Alternativ oder zusätzlich kann die Kommunikation zwischen Basisstation und Füllstandmessgerät auch darin bestehen, dass das Füllstandmessgerät während Ruhephasen an der Basisstation verharrt.

Merkmale und Elemente des Füllstandmessgeräts, so wie voranstehend und nachfolgend beschrieben, können Merkmale und Elemente der Messanordnung, so wie voranstehend und nachfolgend beschrieben, sein und umgekehrt.

Gemäß einer Ausführungsform weist das Füllstandmessgerät einen Energiespeicher zum Speichern elektrischer Energie auf, und die Basisstation weist ein Energieversorgungsmodul auf, wobei die Basisstation dazu eingerichtet ist, während eines Verharrens des Füllstandmessgeräts an der Basisstation den Energiespeicher des Füllstandmessgeräts zumindest teilweise mit elektrischer Energie zu füllen. Mit anderen Worten kann die Basisstation dazu eingerichtet sein, den Energiespeicher, etwa einen Akku, des Füllstandmessgeräts zu laden. Der Energiespeicher kann dabei kontaktgebunden oder kontaktlos, etwa mittels Induktion, geladen werden.

Gemäß einer Ausführungsform weist die Basisstation ein Steuermodul auf, welches dazu eingerichtet ist, die von dem Füllstandmessgerät erfasste Füllhöhe zu verarbeiten, einen zeitlichen Ablauf von Messzyklen des Füllstandmessgeräts zu regeln, einen Ladevorgang eines Energiespeichers des Füllstandmessgeräts zu regeln, eine Interaktion mit einem Benutzer über eine Benutzerschnittstelle zu koordinieren, eine Kommunikation mit dem Füllstandmessgerät über ein Kommunikationsmodul des Füllstandmessgeräts bereitzustellen, und/oder die von dem Füllstandmessgerät erfasste Füllhöhe an eine Leitstation zu übertragen. Die Basisstation kann etwa über eine Energieversorgungsschnittstelle und/oder eine Kommunikationsschnittstelle an die Leitstation zur Übertragung von Energie und/oder von Messwerten angeschlossen sein. Beispielsweise kann die Basisstation und die Leitstation über eine 4..20 mA, einen HART Bus, eine Profibus, einen FF, einen Modbus, einen IO-Link, eine Ethernetverbindung, eine USB-Verbindung, einen serielle Bus und/oder einen parallelen Bus verbunden sein.

Gemäß einer Ausführungsform ist ein Steuermodul der Basisstation und/oder die Steuereinheit des Füllstandmessgeräts dazu eingerichtet, wenigstens einen Kennwert des Schüttguts und/oder der Schütthalde zu ermitteln, wobei der wenigstens eine Kennwert ein Element ausgewählt aus der Gruppe bestehend aus Volumen des Schüttguts, Tonnage des Schüttguts, Befüllgrad einer Schütthalde, mittlerer Füllhöhenwert des Schüttguts, Verlauf der Oberfläche des Schüttguts und Topologie des Schüttguts ist. Die Steuereinheit und/oder das Steuermodul können dazu eingerichtet sein, basierend auf den ermittelten Füllhöhen sowie optional basierend auf weiteren Parametern den wenigstens einen Kennwert zu bestimmen, zu ermitteln und/oder zu berechnen.

Gemäß einer Ausführungsform ist die Messanordnung dazu eingerichtet, Koordinaten einer Schütthalde festzulegen, innerhalb derer eine Füllhöhe mit dem Füllstandmessgerät ermittelt wird, indem eine Standortbestimmungsvorrichtung entlang einer äußeren Begrenzung der Schütthalde bewegt wird, indem eine Mehrzahl von geographischen Koordinaten entlang der Begrenzung mit der Standortbestimmungsvorrichtung ermittelt wird, und indem die Mehrzahl von geographischen Koordinaten in einer Speichervorrichtung des Füllstandmessgeräts und/oder der Basisstation hinterlegt wird. Die Standortbestimmungsvorrichtung kann etwa ein GPS-Empfänger sein. Beispielsweise kann ein Benutzer die Begrenzung abschreiten und die Standortbestimmungsvorrichtung mit sich fuhren. Alternativ oder zusätzlich kann das Füllstandmessgerät die Standortbestimmungsvorrichtung aufweisen und das Füllstandmessgerät kann durch einen Benutzer während des Abschreitens der Begrenzung mit sich geführt werden, um die Koordinaten festzulegen. Auch ist denkbar, dass das Füllstandmessgerät per Fernsteuerung gesteuert und/oder gelenkt wird und die Begrenzung per Fernsteuerung abgeflogen wird, um die Koordinaten festzulegen. Es kann auch vorgesehen sein, die geographischen Koordinaten unter Verwendung internetbasierter Datenbanken und/oder Kartendiensten in einer geeigneten Softwareoberfläche grafisch einzuzeichnen, und an das Füllstandmessgerät zu übermitteln. Das Füllstandmessgerät kann auf diese Weise programmiert werden, die Füllhöhen innerhalb der Begrenzung zu ermitteln. Dies kann erlauben, dass auf einfache, schnelle und kosteneffiziente Weise die Messanordnung bzw. das Füllstandmessgerät für eine neue Messumgebung eingerichtet bzw. an diese angepasst werden kann, ohne dass weiterer Installationsaufwand nötig wäre. Voranstehend erläutertes Konzept, Koordinaten mit der Standortbestimmungsvorrichtung festzulegen, kann auch in vorteilhafter Weise beispielsweise bei Staubsaugern und/oder Rasenmähern angewendet werden, welche dazu ausgelegt sind, selbstständig innerhalb eines begrenzten Gebietes bewegt zu werden.

Ein weiterer Aspekt der Erfindung betrifft ein Verfahren zum Ermitteln einer Füllhöhe eines Schüttguts mit einem Füllstandmessgerät, welches eine Steuereinheit und ein Flugantriebsmodul zum Positionieren des Füllstandmessgeräts oberhalb des Schüttguts aufweist, wobei das Füllstandmessgerät ein Sende-Empfangsmodul mit einer Antennenanordnung zum Aussenden eines radarbasierten Sendesignals und zum Empfangen eines an einer Oberfläche des Schüttguts reflektierten Signals aufweist; Das Verfahren weist die folgenden Schritte auf:
- Steuern des Flugantriebmoduls durch die Steuereinheit derart, dass das Füllstandmessgerät entlang einer Flugbahn eine Mehrzahl von Positionen oberhalb des Schüttguts einnimmt; und
- Ermitteln einer Füllhöhe des Schüttguts an zumindest einem Teil der Mehrzahl von eingenommen Positionen.

Merkmale und Elemente des Füllstandmessgeräts und/oder der Messanordnung, so wie voranstehend und nachfolgend beschrieben, können Merkmale und Schritte des Verfahrens, so wie voranstehend und nachfolgend beschrieben, sein und umgekehrt.

Ein weiterer Aspekt der Erfindung betrifft ein Programmelement, das, wenn es auf einer Steuereinheit eines Füllstandmessgeräts ausgeführt wird, das Füllstandmessgerät anleitet, die Schritte des Verfahrens, so wie voranstehend und nachfolgend beschrieben auszuführen.

Ein weiterer Aspekt der Erfindung betrifft ein computerlesbares Medium, auf dem ein Programmelement gespeichert ist, das, wenn es auf einer Steuereinheit eines Füllstandmessgeräts ausgeführt wird, das Füllstandmessgerät anleitet, die Schritte des Verfahrens, so wie voranstehend und nachfolgend beschrieben auszuführen.

Im Folgenden werden Ausführungsbeispiele der Erfindung unter Bezugnahme auf die beigefügten Figuren beschrieben. Dabei können gleiche Bezugszeichen gleiche, gleichwirkende oder ähnliche Elemente bezeichnen.

### Kurze Beschreibung der Figuren

Fig. 1 zeigt ein Füllstandmessgerät zur Erfassung einer Topologie eines Schüttguts in einem Behälter.
Fig. 2 zeigt ein Füllstandmessgerät zur Erfassung einer Topologie eines Schüttguts auf einer Schüttguthalde.
Fig. 3 zeigt Füllstandmessgeräte zur Erfassung einer Topologie eines Schüttguts auf einer Schüttguthalde.
Fig. 4 zeigt ein Füllstandmessgerät zur Erfassung einer Topologie eines Schüttguts auf einer Schüttguthalde.
Fig. 5 zeigt eine Messanordnung zur Erfassung einer Topologie eines Schüttguts auf einer Schüttguthalde gemäß einem Ausführungsbeispiel.
Fig. 6 zeigt eine Messanordnung mit einer Basisstation und einem Füllstandmessgerät gemäß einem Ausführungsbeispiel.
Fig. 7 bis 10 zeigen jeweils eine Messanordnung gemäß Ausführungsbeispielen.
Fig. 11 zeigt ein Flussdiagramm zur Illustration von Schritten eines Verfahrens zum Ermitteln einer Füllhöhe eines Schüttguts.
Fig. 12 zeigt ein Flussdiagramm zur Illustration von Schritten eines Verfahrens zum Ermitteln einer Füllhöhe eines Schüttguts.

Die Darstellungen in den Figuren sind lediglich schematisch und nicht maßstabsgetreu.

### Detaillierte Beschreibung von Ausführungsbeispielen

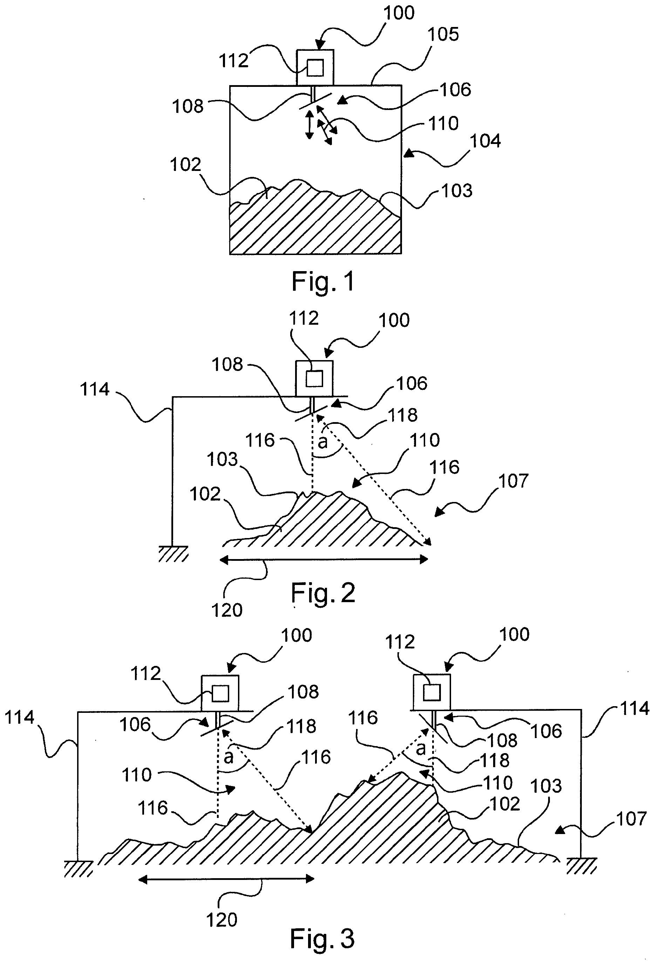

Fig. 1 zeigt ein Füllstandmessgerät 100 zur Erfassung einer Topologie eines Schüttguts 102 in einem Behälter 104.

Das Füllstandmessgerät 100 ist bei dem in Fig. 1 gezeigten Beispiel außenseitig in einem Deckenbereich 105 des Behälters 104 angeordnet und/oder mechanisch befestigt.

Das Füllstandmessgerät weist ein Sende-Empfangsmodul 106 zum Aussenden eines Sendesignals und zum Empfangen eines an einer Oberfläche 103 des Schüttguts 102 reflektierten Signals auf. Das Sende-Empfangsmodul 106 ist in Form einer Antennenanordnung 106 ausgebildet, welche mindestens eine Antenne 108 aufweist, die in einer Hauptstrahlrichtung 110 das Sendesignal aussendet und in der Hauptempfangsrichtung 110 das reflektierte Signal empfängt.

Weiter weist das Füllstandmessgerät 100 eine Steuereinheit 112 auf, welche insbesondere dazu ausgelegt ist, durch geeignete Steuerbefehle die Hauptstrahlrichtung 110 der Antennenanordnung 106 zu verändern. Unter Veränderung der Hauptstrahlrichtung und/oder Hauptempfangsrichtung 110 wird letztlich ein Verlauf und/oder die Topologie der unterhalb des Füllstandmessgerätes 100 befindlichen Oberfläche 103 des innerhalb des Behälters 104 angeordneten und/oder gelagerten Schüttgutes 102 ermittelt, bestimmt und/oder erfasst. Das Füllstandmessgerät 100 ist dazu eingerichtet, den Abstand zur Oberfläche 103 insbesondere durch Anwendung eines Laufzeitverfahrens unter Verwendung von elektromagnetischen und/oder akustischen Signalen zu bestimmen. Die Änderung der Hauptstrahlrichtung 110, welche ebenso die Hauptempfangsrichtung 110 bezeichnen kann, kann durch elektronische Strahlablenkung und/oder auch durch mechanische Strahlablenkung erfolgen. Als Ergebnis der Messung kann das Füllstandmessgerät 100 und/oder die Steuereinheit 112 einen oder mehrere Kennwerte des Schüttguts 102 bestimmen, beispielsweise ein Volumen des Schüttguts 102, eine Tonnage des Schüttguts 102, einen Befüllgrad des Behälters 104, einen mittleren Füllhöhenwert bzw. eine mittlere Füllhöhe des Schüttguts 102, einen Verlauf der Oberfläche 103 des Schüttguts 102 und/oder eine Topologie der Oberfläche 103 des Schüttguts 102.

Fig. 2 zeigt ein Füllstandmessgerät 100 zur Erfassung einer Topologie eines Schüttguts 102 auf einer Schüttguthalde 107. Sofern nicht anders beschrieben weist das Füllstandmessgerät 100 der Fig. 2 dieselben Elemente und Merkmale auf wie das Füllstandmessgerät 100 der Fig. 1.

Im Gegensatz zum Ausführungsbeispiel der Figur 1 ist das Füllstandmessgerät 100 auf einer offenen Schüttguthalde 107 angeordnet und dazu ausgeführt, den Verlauf der Schüttgutoberfläche 102 der offenen Schüttguthalde 107 zu ermitteln und/oder zu bestimmen. In Ermangelung einer Möglichkeit zur mechanischen Befestigung an einem Behälter 104 ist das Füllstandmessgerät 100 der Fig. 2 zum Zwecke der Positionierung des Füllstandmessgeräts 100 oberhalb der Schüttgutoberfläche 102 an einem mechanischen Befestigungselement 114 befestigt, beispielsweise an einem Ausleger 114 und/oder einem Seil 114. Das Füllstandmessgerät 100 kann ausgehend von der jeweiligen Montageposition an diesem Befestigungselement 114 durch Veränderung der Hauptstrahl- und/oder Empfangsrichtung 110 die Oberfläche 103 des Schüttgutes 102 abtasten, und insbesondere den Verlauf der Oberfläche 102 durch Bestimmung von Abstandswerten 116 zwischen dem Füllstandmessgerät 100 und der Oberfläche 103 des Schüttguts 102 auf der Schüttguthalde 107 unter verschiedenen Winkelwerten ermitteln. Im Allgemeinen ist der maximale Ablenkwinkel (a) 118 durch die technische Realisierung der Messapparatur, d.h. des Füllstandmessgeräts 100 mit Befestigungselement 114, begrenzt, was dazu führt, dass nur eine begrenzte Breite 120 bzw. Fläche 120 der Schüttguthalde 107 mit einem einzigen Füllstandmessgerät 100 vermessen werden kann.

Fig. 3 zeigt Füllstandmessgeräte 100 zur Erfassung einer Topologie eines Schüttguts 102 auf einer Schüttguthalde 107. Sofern nicht anders beschrieben weisen die Füllstandmessgeräte 100 der Fig. 3 dieselben Elemente und Merkmale auf wie die in vorangegangenen Figuren beschriebenen Füllstandmessgeräte 100.

Soll eine im Vergleich zur Schüttguthalde 107 der Fig. 2 größere Schüttguthalde 107 wie in Fig. 3 gezeigt vermessen werden, so kann die maximal mögliche Breite 120 bzw. Fläche 120, welche mit einem einzigen Füllstandmessgerät 100 vermessen werden kann, durch die reale Abmessung der Schüttguthalde 107 überschritten sein. Häufig werden daher bei räumlich ausgedehnten Schüttguthalden 107 mehrere Füllstandmessgeräte 100 zur Bestimmung des Verlaufs der Oberfläche 103 des Schüttguts 102 der Schüttguthalde 107 nebeneinander angeordnet. Zur räumlichen Positionierung der Füllstandmessgeräte 100 werden in der Regel mehrere räumlich voneinander beabstandete Befestigungselemente 114 verwendet. Neben einem erhöhten Installations- und Wartungsaufwand können bei derartigen Messaufbauten aufgrund einer erhöhten Anzahl notwendiger Bauteile und/oder Füllstandmessgeräte 100 beträchtliche Beschaffungskosten auftreten, die eine wirtschaftlich sinnvolle Vermessung einer ausgedehnten Schüttguthalde 107 oft schwierig gestalten können. Ferner ist bei dem in Fig. 3 gezeigten Ausführungsbeispiel häufig eine Auswerteeinheit (nicht dargestellt) erforderlich, die dazu eingerichtet ist, aus den von den einzelnen Füllstandmessgeräten 100 gewonnenen Daten ein Gesamtabbild oder eine Gesamtmessgröße, welche charakteristisch für die Schüttguthalde 107 ist, zu ermitteln und diese bereitzustellen.

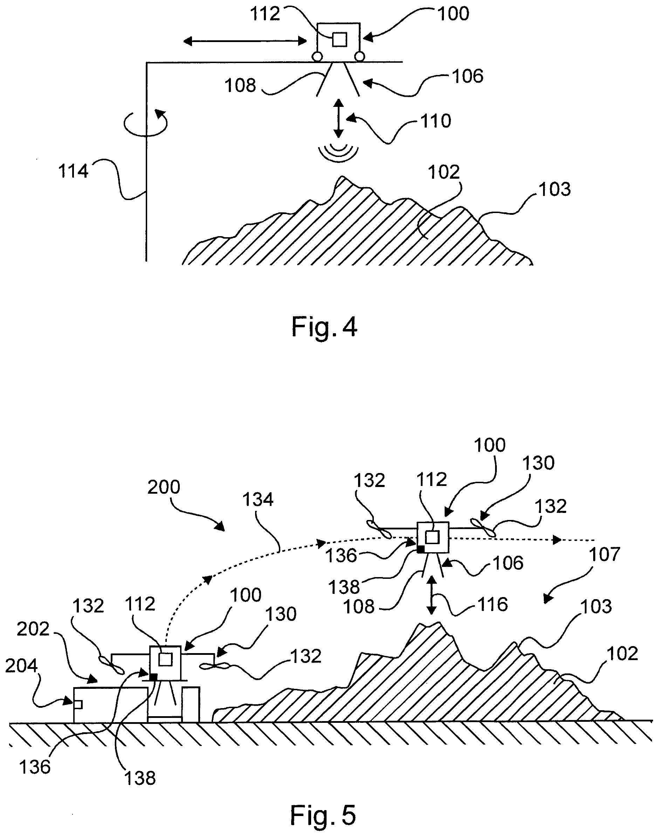

Fig. 4 zeigt ein Füllstandmessgerät 100 zur Erfassung einer Topologie eines Schüttguts 102 auf einer Schüttguthalde 107. Sofern nicht anders beschrieben weist das Füllstandmessgerät 100 der Fig. 4 dieselben Elemente und Merkmale auf wie die in vorangegangenen Figuren beschriebenen Füllstandmessgeräte 100.

Das in Fig. 4 gezeigte Füllstandmessgerät 100 ist an einem drehbaren und/oder schwenkbaren Befestigungselement 114 befestigt. Das Füllstandmessgerät 100 selbst ist in lateraler Richtung auf dem Befestigungselement 114 verschiebbar angeordnet. Durch Drehen des Befestigungselements 114 und/oder durch Verschieben des Füllstandmessgeräts 100 kann nahezu jeder Punkt oberhalb des Schüttguts 102 der Schüttguthalde 107 angefahren und/oder vermessen werden, wobei an verschiedenen Positionen jeweils der Abstand zu der darunterliegenden Oberfläche 103 mittels Laufzeitverfahren bestimmt werden. Zwar können so große Oberflächen 103 mit einem einzigen Füllstandmessgerät 100 vermessen werden, jedoch kann das Befestigungselement 114 in Verbindung mit einer lateralen Positioniereinrichtung für das Füllstandmessgerät 100 einen hohen Montageaufwand und hohe Kosten erfordern. Ferner ist wegen der auftretenden Kräfte innerhalb einer solchen Vorrichtung die maximale Größe der zu vermessenden Schüttguthalde 107 begrenzt, d.h. das Befestigungselement 114 sowie ein daran angeordneter Ausleger zur lateralen Positionierung können nicht beliebig groß ausgebildet werden. Zudem können die mechanischen Komponenten des Befestigungselements 114 teuer, verschleißanfällig und nur durch erhöhten Aufwand an einer Schüttguthalde 107 montierbar sein.

Fig. 5 zeigt eine Messanordnung 200 zur Erfassung einer Topologie eines Schüttguts 102 auf einer Schüttguthalde 107 gemäß einem Ausführungsbeispiel der Erfindung. Die Messanordnung 200 weist ein Füllstandmessgerät 100 und eine Basisstation 202 auf. Sofern nicht anders beschrieben weist das Füllstandmessgerät 100 der Fig. 5 dieselben Elemente und Merkmale auf wie die in vorangegangenen Figuren beschriebenen Füllstandmessgeräte 100. Es kann auch vorgesehen sein, dass das Füllstandmessgerät 100 nur eine einzige Hauptstrahl- und Empfangsrichtung 110 aufweist, also ohne Vorrichtungen zur Veränderung einer Strahlrichtung ausgeführt ist. Dies ermöglicht eine vereinfachte technische Realisierung eines solchen Gerätes.

Sämtliche in vorangegangenen Figuren beschriebenen Unwegsamkeiten bei der Vermessung von Schüttgut 102, insbesondere auf offenen Schüttguthalden 107, sind durch die in Fig. 5 gezeigte Messanordnung 200 behoben. Das erfindungsgemäße Füllstandmessgerät 100 ist als mobiles, fliegendes und/oder flugfähiges Füllstandmessgerät 100 ausgestaltet. Dazu verfügt das Füllstandmessgerät 100 über ein Flugantriebsmodul 130 und/oder eine Flugeinheit 130 mit einer Mehrzahl von Aktoren 132, wie etwa Elektromotoren mit je einem Propeller, welche eine beliebige Positionierung des Füllstandmessgeräts 100 oberhalb der Oberfläche 103 des Schüttguts 102 in drei zueinander orthogonalen Raumrichtungen und/oder Raumdimensionen erlauben.

Das Sende-Empfangsmodul 106 zum Aussenden des Sendesignals und zum Empfangen des an der Oberfläche 103 des Schüttguts 102 reflektierten Signals kann insbesondere als Antennenanordnung 106 mit einer oder mehreren Antennen 108 ausgebildet sein, so dass die Steuereinheit 112 basierend auf dem Sendesignal und dem reflektierten Signal mittels eines Laufzeitverfahrens den Abstand 116 des Füllstandmessgeräts 100 zur Oberfläche 103 des Schüttguts 102 an der jeweiligen Position des Füllstandmessgeräts 100 ermitteln kann. Basierend auf diesem Abstand 116 kann die Steuereinheit 112 ferner die Füllhöhe bzw. einen Füllhöhenwert des Schüttguts 102 an der jeweiligen Position ermitteln. Das Füllstandmessgerät 100 kann dementsprechend ein Radarmodul aufweisen, mit Hilfe dessen ein radarbasiertes Sendesignal über die Antennenanordnung in Richtung der Oberfläche 103 abgestrahlt und ein entsprechendes reflektiertes Signal empfangen und ausgewertet werden kann. Alternativ oder zusätzlich kann das Sende-Empfangsmodul 106 auch ein anderes elektromagnetisches Signal, etwa einen Laserpuls, und/oder ein schallbasiertes Signal zur Abstandermittlung abstrahlen und empfangen.

Um die Oberfläche 103 des Schüttguts 102 auf der Schüttguthalde 107 großflächig zu vermessen, ist die Steuereinheit 112 dazu eingerichtet, das Flugantriebsmodul 130 und/oder die Aktoren 132 derart zu steuern, anzusteuern und/oder zu regeln, dass das Füllstandmessgerät 100 entlang einer Flugbahn 134 eine Mehrzahl von Positionen oberhalb des Schüttguts 102 und/oder oberhalb der Oberfläche 103 des Schüttguts 102 einnimmt. Weiter ist die Steuereinheit 112 dazu eingerichtet, zumindest an einem Teil der Mehrzahl von eingenommenen Positionen des Füllstandmessgerätes 100 jeweils die Füllhöhe und/oder jeweils einen Füllhöhenwert des Schüttguts 102 basierend auf einer Abstandsmessung zur Oberfläche mittels Laufzeitverfahren zu ermitteln.

Mit anderen Worten ist das Füllstandmessgerät 100 als mobile Sensoreinheit mit integriertem Flugantriebsmodul 130 ausgestaltet und kann an verschiedenen Positionen im Luftraum oberhalb der zu vermessenden Schüttguthalde 107 positioniert werden. Das Füllstandmessgerät 100 kann sich während eines Messzyklus an verschiedenen Positionen oberhalb der Schüttguthalde 107 bzw. der Oberfläche 103 des Schüttguts 102 positionieren, und kann an diesen Positionen jeweils den Abstand 116 zur Schüttgutoberfläche 103 ermitteln, insbesondere durch Anwendung eines Laufzeitverfahrens.

Die Mehrzahl an Positionen, die das Füllstandmessgerät 100 nacheinander zur Abstandmessung einnimmt, kann auch durch die Flugbahn 134 beschrieben werden, wobei ein Startpunkt und/oder ein Endpunkt der Flugbahn 134 insbesondere eine Ruheposition des Füllstandmessgeräts 100 an der Basisstation 202 sein kann.

Die Basisstation 202 kann dabei über zumindest eine Energieversorgungsschnittstelle 204 und/oder eine Kommunikationsschnittstelle 204 an eine in Fig. 5 nicht dargestellte, übergeordnete Energieversorgungseinrichtung, Steuereinrichtung, Leitstation und/oder Anzeigeeinrichtung angeschlossen sein. Zur Übertragung von Messwerten, d.h. ermittelten Abstandswerten, Füllhöhen und/oder Füllhöhenwerten, und/oder zur Übertragung von Energie kann die Schnittstelle 204 verschiedene Standards umsetzen. Es mag insbesondere vorgesehen sein, dass die Basisstation 202 über eine 4..20 mA Schnittstelle 204 an die Leitstation angeschlossen ist. Weiterhin mögliche Schnittstellenstandards sind analoge Standards, digitale Standards oder kombinierte Standards. Beispiele für potentielle Schnittstellen 204 sind HART, Profibus, FF, Modbus, IO-Link, Ethernet, USB, serielle und parallele Busse.

Vorteilhafterweise besitzt das Füllstandmessgerät 100 keine kabelgebundene Verbindung zur Basisstation 202. Es kann vorgesehen sein, dass das Füllstandmessgerät während des Verharrens an der Basisstation 202 von dieser Energie bezieht, und während des Vermessens der Schüttguthalde 107 in Kommunikation mit der Basisstation und/oder der übergeordneten weiteren Auswerteeinheit steht.

Zur drahtlosen Kommunikation des Füllstandmessgeräts 100 mit der Basisstation 202 weist das Füllstandmessgerät 100 ein Kommunikationsmodul 136 mit einer Kommunikationsschnittstelle 138 auf, wobei die Steuereinheit 112 dazu eingerichtet ist, die ermittelte Füllhöhe über das Kommunikationsmodul 136 und/oder die Kommunikationsschnittstelle 138 an die Basisstation 202 zu übermitteln. Auch kann das Füllstandmessgerät 100 dazu eingerichtet sein, über die Kommunikationsschnittstelle 138 und/oder das Kommunikationsmodul 136 Steuerbefehle von der Basisstation 202 zu empfangen, etwa zur Übermittlung der zu vermessenden Positionen und/oder zur Übermittlung von Koordinaten der Flugbahn 134.

In alternativer Ausgestaltung kann vorgesehen sein, dass das Füllstandmessgerät 100 während eines Messzyklus keinerlei Kommunikation nach außen hin, insbesondere nicht zur Basisstation 202 betreibt, sondern die erfassten Messdaten, d.h. Abtastwerte, Zwischenfrequenzwerte, Echokurvenwerte, Abstandswerte, Füllhöhen und/oder Füllhöhenwerte, in einem Speicher und/oder einer Speichervorrichtung des Füllstandmessgeräts 100 ablegt, speichert und/oder hinterlegt, und in einer darauffolgenden Phase des stationären Verharrens an der Basisstation 202 an diese und/oder an eine übergeordnete Auswerteeinheit, etwa eine Leitstation, überträgt und/oder übermittelt.

Die in Fig. 5 gezeigte Messanordnung 200 macht sich insbesondere den Vorteil zu Nutze, dass die Geschwindigkeit einer Veränderung der Schütthalde 107 bei ausgedehnten Varianten derselben eher gering ist. Hierdurch wird es möglich, dass das Füllstandmessgerät 100 über einen längeren Zeitraum hinweg in der Ruheposition mit Kontakt zur Basisstation 202 verbleibt, und diese beispielsweise nur wenige Male pro Tag verlässt, um die Ausdehnungen, Abmessungen, Füllhöhen und insbesondere die Topologie der Schüttguthalde 107 zu vermessen, und die daraus resultierenden Messwerte in einem Speicher der Basisstation 202 zu aktualisieren. Während der Ruhephase kann die Basisstation 202 Energie an das Füllstandmessgerät 100 übertragen, wobei diese Energieübertragung kontaktgebunden oder auch kontaktlos, etwa durch Induktion, erfolgen kann. Durch die zeitlich ausgedehnte Ruhephase kann insbesondere auch ermöglicht werden, trotz begrenzter zur Verfügung stehender Leistung an der Schnittstelle 204 die für einen Messzyklus für den Flug und die Durchführung von Messungen oberhalb der Schüttguthalde 107 notwendige Energie an das Füllstandmessgerät 100 zu übertragen, und in dem Füllstandmessgerät 100 zwischen zu speichern, wie in nachfolgenden Figuren im Detail erläutert. Weiterhin ist der Installationsaufwand der Messanordnung 200 gemäß Fig. 5 für einen Benutzer sehr gering. Zudem muss unabhängig von der Größe der zu vermessenden Schüttguthalde 107 lediglich ein einziges Füllstandmessgerät 100 beschafft werden, was einen wirtschaftlichen Betrieb sicherstellen kann.

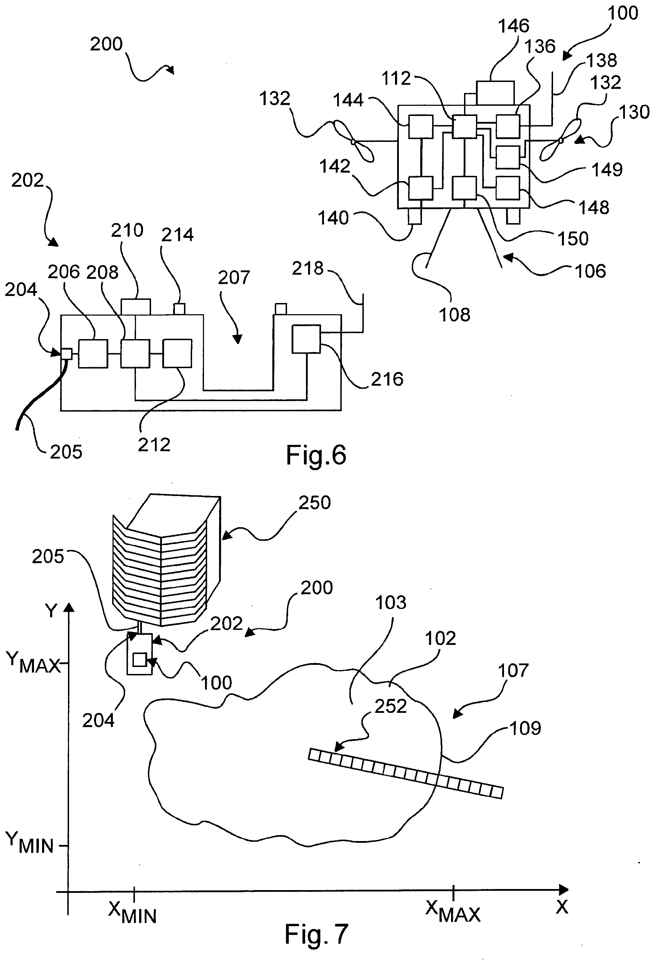

Fig. 6 zeigt eine Messanordnung 200 mit einer Basisstation 202 und einem Füllstandmessgerät 100 gemäß einem Ausführungsbeispiel der Erfindung. Sofern nicht anders beschrieben weist die Basisstation 202 und das Füllstandmessgerät 100 der Fig. 6 dieselben Elemente und Merkmale wie die in vorangegangenen Figuren beschriebenen Basisstationen 202 und Füllstandmessgeräte 100 auf.

Die Basisstation 202 bezieht über die Schnittstelle 204 und eine daran angeschlossene Energieversorgungsleitung 205 elektrische Energie, welche von einer Netzteileinheit 206 empfangen und in einer vorteilhaften Ausführungsform auch zwischengespeichert werden kann, beispielsweise während einer Betriebsphase, in welcher das Füllstandmessgerät 100 nicht in der Ruheposition in einer Aufnahme 207 der Basisstation 202 verharrt. Weiterhin weist die Basisstation 202 eine Steuerung 208 bzw. ein Steuermodul 208 auf, welches dazu eingerichtet ist, einen zeitlichen Ablauf von Messzyklen, ein Laden des Füllstandmessgeräts 100, eine Interaktion mit einem Benutzer über eine Benutzerschnittstelle 210, eine Kommunikation mit dem Füllstandmessgerät 100 sowie eine Übertragung von Messwerten, d.h. Abstandswerten, Füllhöhen und/oder Füllhöhenwerten, an eine übergeordnete Leitstation zu koordinieren.

Weiter weist die Basisstation 202 ein Energieversorgungsmodul 212 bzw. eine Ladeeinheit 212 auf, welche dazu eingerichtet ist, während des Verharrens des Füllstandmessgeräts 100 in der Aufnahme 207 der Basisstation 202 elektrische Energie an das Füllstandmessgerät 100 zu übertragen. Hierzu kann das Energieversorgungsmodul 212 insbesondere eine an der Basisstation 202 angeordnete Energieübertragungseinheit 214 nutzen sowie eine an dem Füllstandmessgerät 100 angeordnete Energieempfangseinheit 140. Die Energieübertragungseinheit 214 und die Energieempfangseinheit 140 können einfache elektrische Kontakte, beispielsweise Federkontakte, und/oder kontaktlose Vorrichtungen zur Übertragung von Energie und/oder von Information, beispielsweise über induktive Kopplung, aufweisen.

Weiter weist die Basisstation 202 eine Kommunikationseinheit 216 auf, welche z.B. in Verbindung mit einer Antenne 218 Steuerbefehle und/oder Messwerte an das Füllstandmessgerät 100 übertragen und/oder von diesem empfangen kann, insbesondere über die Kommunikationsschnittstelle 138 und/oder das Kommunikationsmodul 136.

Das Füllstandmessgerät 100 weist eine Ladeeinheit 142 auf, welche in der Phase des stationären Verharrens an der Basisstation 202 Energie über die Energieempfangseinheit 140 empfangen kann, und diese dazu verwendet, zumindest einen Energiespeicher 144 zumindest teilweise mit elektrischer Energie zu füllen und/oder zu laden. Die Steuereinheit 112 kann dabei einen Teil oder den gesamten Betriebsablauf innerhalb des Füllstandmessgeräts 100 kontrollieren und/oder steuern. Hierzu kann die Steuereinheit 112 Benutzervorgaben über eine Benutzerschnittstelle 146 empfangen.

Ferner kann vorgesehen sein, dass die Steuereinheit 112 die Bewegung und/oder Positionierung des Füllstandmessgeräts 100 im Raum kontrolliert, regelt und/oder steuert. Hierzu kann die Steuereinheit 112 verschiedene Messwerte von Sensoren 148 des Füllstandmessgeräts 100, wie beispielsweise GPS-Sensoren, Neigungssensoren, Beschleunigungssensoren, Drucksensoren, Näherungssensoren, empfangen und dazu verwenden, die aktuelle Lage und/oder Ausrichtung des Füllstandmessgeräts 100 im Raum exakt zu bestimmen und/oder zu ermitteln.

Weiter kann das Füllstandmessgerät 100 verschiedene Aktoren 132, beispielsweise Elektromotoren 149, ansteuern, um die Lage des Füllstandmessgeräts 100 im Raum zu korrigieren, zu halten und/oder zu verändern. Die Steuereinheit 112 kann darüber hinaus dazu ausgeführt sein, zumindest eine Messeinheit 150 des Füllstandmessgeräts 100 anzusteuern, welche mit dem Sende-Empfangsmodul 136 gekoppelt ist und die Entfernung bzw. den Abstand 116 des Füllstandmessgeräts 100 von der Oberfläche 103 des Schüttguts 102 nach einem Laufzeitverfahren zu bestimmen. Unter Berücksichtigung der aktuellen Lage des Füllstandmessgeräts 100 im Raum und unter Verwendung des bestimmten Abstandes 110 kann die Steuereinheit 112 die Lage unterschiedlicher Punkte der Oberfläche 103 des Schüttgutes 102 im Raum bestimmen.

Weiterhin kann vorgesehen sein, dass das Füllstandmessgerät 100 über die drahtlose Kommunikationsschnittstelle 138 und/oder das Kommunikationsmodul 136 Steuerbefehle und/oder Messwerte an die Basisstation 202 und/oder an eine nicht dargestellte übergeordnete Leitstation übermittelt und/oder von dieser empfängt.

Fig. 7 zeigt eine Messanordnung 200 gemäß einem weiteren Ausführungsbeispiel der Erfindung. Sofern nicht anders beschrieben weist die Messanordnung 200 bzw. die Basisstation 202 und das Füllstandmessgerät 100 der Messanordnung 200 der Fig. 7 dieselben Elemente und Merkmale wie die in vorangegangenen Figuren beschriebenen Basisstationen 202 und Füllstandmessgeräte 100 auf.

Bei dem in Figur 7 gezeigten Ausführungsbeispiel ist das Füllstandmessgerät 100 in der Aufnahme 207 der Basisstation 202 aufgenommen und befindet sich in der Ruhephase. Exemplarisch ist die an die Schnittstelle 204 der Basisstation 202 angebundene Versorgungsleitung 205 an einem Betriebsgebäude 250 bzw. einer Leitstation 250 installiert und mit dieser elektrisch verbunden. In vorgebbaren, definierbaren und/oder programmierbaren zeitlichen Abständen verlässt das Füllstandmessgerät 100 automatisiert, selbstständig und/oder automatisch die Basisstation 202, um die Oberfläche 103 des Schüttguts 102 der Schüttguthalde 107 zu vermessen. Das Füllstandmessgerät 100 kann vorab durch entsprechende Benutzereingaben Information erhalten, durch welche das zu vermessende Gebiet und/oder die zu vermessende Schüttguthalde 107 festgelegt werden können. Beispielsweise können Koordinaten (Y_{MIN}, Y_{MAX}, X_{MIN}, X_{MAX}) für die Schüttguthalde 107 und/oder das zu vermessende Gebiet in einem Speicher und/oder einer Speichervorrichtung des Füllstandmessgeräts 100 hinterlegt sein. Auch können die Koordinaten in einem Speicher und/oder einer Speichervorrichtung der Basisstation 202 hinterlegt sein und als Steuerbefehle über die Kommunikationsschnittstelle 138 an das Füllstandmessgerät 100 übertragen werden.

Alternativ oder zusätzlich kann vorgesehen sein, dass ein Benutzer während einer Einlernphase des Füllstandmessgeräts 100 das zu überwachende Gebiet interaktiv definiert. Hierzu kann der Benutzer beispielsweise unter Mitführen des Füllstandmessgeräts 100, einer Standortbestimmungsvorrichtung oder dergleichen und/oder unter Aktivierung einer spezialisierten App bzw. Software und Mitführen eines Smartphones die zu überwachende Schüttguthalde 107 an deren äußeren Begrenzung 109 umschreiten. Die von dem Füllstandmessgerät 100, der Standortbestimmungsvorrichtung und/oder dem Smartphone während des Umschreitens registrierten GPS-Daten und/oder Koordinaten können anschließend an die Steuereinheit 112 übertragen werden, und während einer Messung dazu verwendet werden, das zu überwachende Gebiet in optimaler Weise zu vermessen und das Füllstandmessgerät 100 nur innerhalb dieses Gebietes Messungen durchführen zu lassen.

In realen Anwendungen können sich ferner auf Schüttguthalden 107 Hindernisse 252 befinden, wie beispielsweise Förderbänder 252, bewegliche Bagger oder Ähnliches. Durch einen oder mehrere Näherungssensoren 148 des Füllstandmessgeräts 100 sowie die zugehörigen Messdaten wird die Steuereinheit 112 in die Lage versetzt, eine Kollision mit diesen Hindernissen 252 durch ein Verändern der Flugroute des Füllstandmessgeräts 100 zuverlässig zu verhindern.

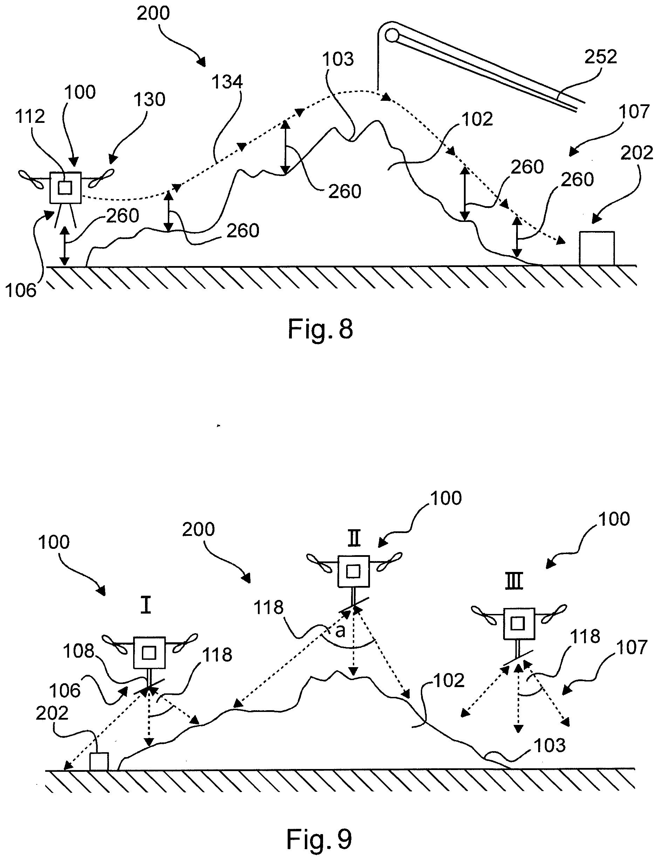

Fig. 8 zeigt eine Messanordnung 200 gemäß einem weiteren Ausführungsbeispiel der Erfindung. Sofern nicht anders beschrieben weist die Messanordnung 200 bzw. die Basisstation 202 und das Füllstandmessgerät 100 der Messanordnung 200 der Fig. 8 dieselben Elemente und Merkmale wie die in vorangegangenen Figuren beschriebenen Basisstationen 202 und Füllstandmessgeräte 100 auf.

Figur 8 illustriert insbesondere eine weitere Strategie, um eine Kollision des Füllstandmessgeräts 100 mit Hindernissen 252 zu vermeiden. Hierbei ist vorgesehen, dass das Füllstandmessgerät 100 während eines Messzyklus seine Position im Raum derart verändert, dass ein Abstand und/oder eine Entfernung des Füllstandmessgeräts 100 zur Oberfläche 103 des Schüttguts 102 der Schüttguthalde 107 an verschiedenen Positionen entlang der Flugbahn 134 einem vorgebbaren Messabstand 260 entspricht und/oder dass der Abstand 260 entlang der Flugbahn 134 eingehalten wird. Das Füllstandmessgerät 100 "kriecht" gleichsam berührungslos in nahezu konstantem Abstand 260 und/oder einem vorbestimmten, definierbaren und/oder programmierbaren Abstandsbereich, z.B. im Bereich weniger Meter, entlang der zu vermessenden Oberfläche 103, wodurch zum einen eine Messgenauigkeit verbessert werden kann und zum anderen das Risiko einer Kollision mit den Hindernissen 252 verringert werden kann. Beispielsweise kann der Abstand 260 derart gewählt sein, dass das Füllstandmessgerät 100 unter den Hindernissen 252 fliegt, wie in Fig. 8 gezeigt, oder darüber hinweg fliegt.

Es kann vorgesehen sein, dass das Füllstandmessgerät 100 während des Abfliegens der Flugbahn 134 kontinuierlich Positionswerte, Koordinatenwerte, Messwerte, Füllhöhen, Abstandswerte und/oder Füllhöhenwerte erfasst, wobei hier eine Vielzahl einzelner Abstandswerte und/oder eine Datenbasis zur anschließenden Anwendung eines SAR-Verfahrens ("Synthetic Aperture Radar", SAR) bestimmt werden kann.

Fig. 9 zeigt eine Messanordnung 200 gemäß einem weiteren Ausführungsbeispiel der Erfindung. Sofern nicht anders beschrieben weist die Messanordnung 200 bzw. die Basisstation 202 und das Füllstandmessgerät 100 der Messanordnung 200 der Fig. 9 dieselben Elemente und Merkmale wie die in vorangegangenen Figuren beschriebenen Basisstationen 202 und Füllstandmessgeräte 100 auf.

Alternativ oder zusätzlich zu dem in Figur 8 beschriebenen Vorgehen kann auch vorgesehen sein, dass das Füllstandmessgerät 100 selbst einen eine Topologie erfassenden Sensor aufweist, wie z.B. eine Antennenanordnung 106 mit wenigstens einer Antenne 108 mit Strahlablenkung, und/oder dass das das Sende-Empfangsmodul 106 zusammen mit der Steuereinheit 112 zur Erfassung der Topologie eingerichtet ist. In diesem Fall kann auf eine kontinuierliche Bestimmung von Messwerten, Abstandswerten, Füllhöhen und/oder Füllhöhenwerten entlang der Flugbahn 134 verzichtet werden. In Abhängigkeit vom maximalen Messwinkel 118 kann das Füllstandmessgerät 100 gezielt einzelne Positionen im Raum (I, II, III) ansteuern und während eines Verharrens an diesen Positionen (I, II, III) ein Messverfahren bzw. eine Messung durchführen. Der so an den jeweiligen Positionen (I, II, III) ermittelte Teil der Topologie oder die so ermittelten Messwerte können in einem Speicher innerhalb dem Füllstandmessgerät 100 und/oder der Steuereinheit 112 zwischengespeichert werden, und nach Abschluss aller Teilmessungen zu einem Gesamtergebnis zusammengesetzt werden.

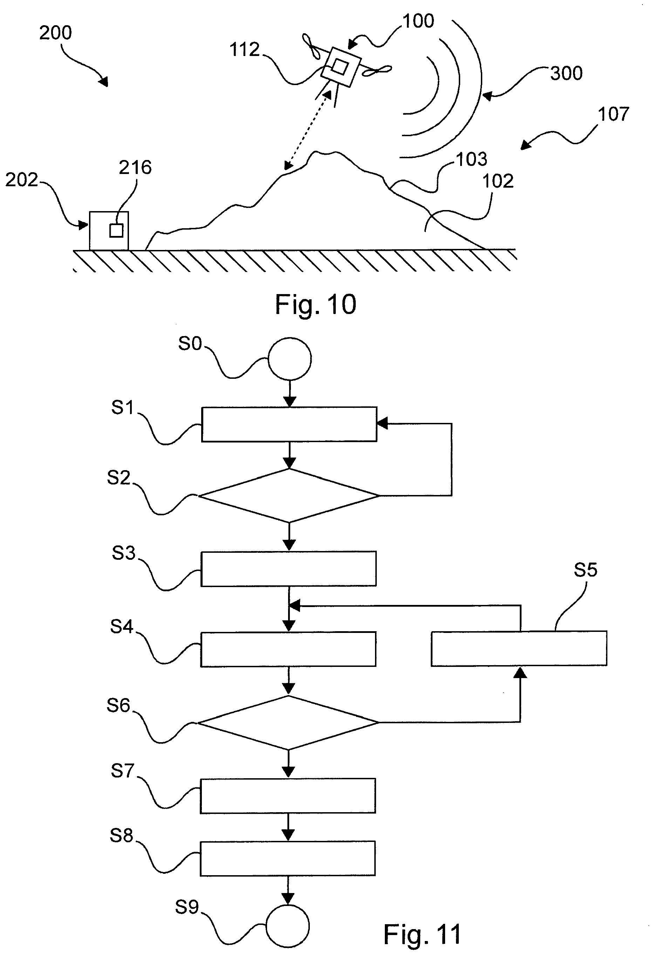

Fig. 10 zeigt eine Messanordnung 200 gemäß einem weiteren Ausführungsbeispiel der Erfindung. Sofern nicht anders beschrieben weist die Messanordnung 200 bzw. die Basisstation 202 und das Füllstandmessgerät 100 der Messanordnung 200 der Fig. 10 dieselben Elemente und Merkmale wie die in vorangegangenen Figuren beschriebenen Basisstationen 202 und Füllstandmessgeräte 100 auf.

Die Messanordnung 200 kann diverse Fehlerbehandlungsmodi aufweisen, wie in Fig. 10 exemplarisch gezeigt. So kann vorgesehen sein, dass das Füllstandmessgerät 100 bei einer ungeplanten Veränderung der Position, Lage und/oder der Ausrichtung des Füllstandmessgeräts 100, wie sie beispielsweise durch aufkommenden Wind 300 verursacht werden kann, den aktuelle ermittelten Messwert, Abstandswert, Füllhöhenwert und/oder die Füllhöhe verwirft, und durch benachbarte Werte interpoliert. Es kann auch vorgesehen sein, dass bei einer vorab definierten Maximalabweichung von der Sollposition eine Notlandung des Füllstandmessgeräts 100 automatisiert durchgeführt wird. In diesem Fall kann an die Basisstation 202 über die Kommunikationseinheit 216 ein Notsignal übertragen werden, mit welchem die aktuelle Position des Füllstandmessgeräts 100 an die Basisstation 202 übermittelt wird. Der gleiche Mechanismus kann angewendet werden, wenn das Füllstandmessgerät 100 durch unvorhersehbare Bedingungen verschüttet wird, beispielsweise durch einen Schüttgutstrom von einem Förderband 252. Über eine App oder andere Anzeigemittel kann dem Benutzer angezeigt werden, wo sich das Füllstandmessgerät 100 befindet. Eine Notlandung kann auch vorgesehen werden, wenn die Kommunikation mit der Basisstation 202 nicht mehr möglich und/oder gestört ist. In diesem Fall kann ein sicherer Zustand bei auftretenden Fehlern erreicht werden. Zudem wird auf diese Art ein effektiver Schutz vor Diebstahl des Füllstandmessgeräts 100 realisiert.

Fig. 11 zeigt ein Flussdiagramm zur Illustration von Schritten eines Verfahrens zum Ermitteln einer Füllhöhe eines Schüttguts 102 mit einer Messanordnung 200 wie voranstehend beschrieben.

Das Verfahren beginnt im Startzustand S0, in welchem das Füllstandmessgerät 100 an der Basisstation 202 verharrt. Zunächst wird das Füllstandmessgerät 100 in einem Schritt S1 über die Basisstation 202 mit Energie versorgt und/oder geladen. In einem Schritt S2 wird ein Ladezustand des Energiespeichers 144 des Füllstandmessgeräts 100 überprüft. Sobald der Energiespeicher 144 des Füllstandmessgeräts 100 geladen ist, fliegt dieses im Schritt S3 die erste Messposition an. Wenn diese erreicht ist, kann das Füllstandmessgerät 100 die erste Abstandsmessung zur Oberfläche 103 des Schüttguts 102 in einem Schritt S4 durchführen. Anschließend wird im Schritt S5 die nächste Messposition angesteuert, um einen weiteren Messwert, Abstandswert, Füllhöhenwert und/oder eine weitere Füllhöhe zu ermitteln. In Schritt S6 wird überprüft, ob alle Messpositionen angeflogen worden sind. Sind alle Messpositionen durchlaufen worden, steuert das Füllstandmessgerät 100 im Schritt S7 wieder die Basisstation 202 an. Ist diese erreicht, werden die Messwerte von dieser im Schritt S8 empfangen und z.B. an eine übergeordnete Leitstation übermittelt. Das Verfahren endet in Schritt S9, in welchem das Füllstandmessgerät 100 wieder in der Ruheposition an der Basisstation 202 verharrt und gegebenenfalls aufgeladen wird.

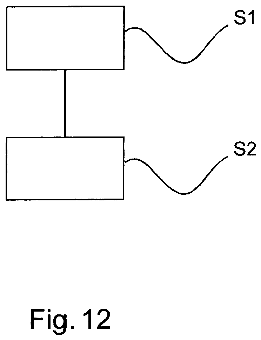

Fig. 12 zeigt ein Flussdiagramm zur Illustration von Schritten eines Verfahrens zum Ermitteln einer Füllhöhe eines Schüttguts 102 mit einer Messanordnung 200 wie voranstehend beschrieben.

In einem ersten Schritt S1 wird das Flugantriebmodul 130 des Füllstandmessgeräts 100 durch die Steuereinheit 112 derart gesteuert, dass das Füllstandmessgerät 100 entlang einer Flugbahn 134 eine Mehrzahl von Positionen oberhalb des Schüttguts 102 einnimmt. In einem weiteren Schritt S2 wird dann eine Füllhöhe des Schüttguts 102 an zumindest einem Teil der Mehrzahl von eingenommen Positionen ermittelt. Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessgerät (100) zum Ermitteln einer Füllhöhe eines Schüttguts (102), aufweisend:
ein Sende-Empfangsmodul (106) zum Aussenden eines Sendesignals und zum Empfangen eines an einer Oberfläche (103) des Schüttguts (102) reflektierten Signals;
eine Steuereinheit (112), welche dazu eingerichtet ist, basierend auf dem Sendesignal und dem reflektierten Signal einen Abstand (116) des Füllstandmessgeräts (100) zur Oberfläche (103) des Schüttguts (102) zu ermitteln; und
ein Flugantriebsmodul (130) zum Positionieren des Füllstandmessgeräts (100) oberhalb des Schüttguts (102);
wobei die Steuereinheit (112) dazu eingerichtet ist, das Flugantriebsmodul (130) derart zu regeln, dass das Füllstandmessgerät (100) entlang einer Flugbahn (134) eine Mehrzahl von Positionen oberhalb des Schüttguts (102) einnimmt; und
wobei die Steuereinheit (112) dazu eingerichtet ist, zumindest an einem Teil der Mehrzahl von eingenommenen Positionen die Füllhöhe des Schüttguts (102) zu ermitteln
**dadurch gekennzeichnet, dass**
das Sende-Empfangsmodul eine Antennenanordnung zum Aussenden und Empfangen eines radarbasierten Signals aufweist.

2. Füllstandmessgerät (100) nach Anspruch 1, weiter aufweisend:
ein Kommunikationsmodul (136) mit einer Kommunikationsschnittstelle (138) zur drahtlosen Kommunikation des Füllstandmessgeräts (100) mit einer Basisstation (202);
wobei die Steuereinheit (112) dazu eingerichtet ist, die ermittelte Füllhöhe über das Kommunikationsmodul (136) an die Basisstation (202) zu übermitteln.

3. Füllstandmessgerät (100) nach Anspruch 2,
wobei das Füllstandmessgerät (100) dazu eingerichtet ist, über die Kommunikationsschnittstelle (138) Steuerbefehle von einer Basisstation (202) zu empfangen.

4. Füllstandmessgerät (100) nach einem der voranstehenden Ansprüche,
wobei das Füllstandmessgerät (100) wenigstens einen Sensor (148) ausgewählt aus der Gruppe bestehend aus Standortbestimmungssensor, Neigungssensor, Beschleunigungssensor, Drucksensor, Abstandsensor und Näherungssensor aufweist;
wobei die Steuereinheit (112) dazu eingerichtet ist, Messwerte des wenigstens einen Sensors (148) zu verarbeiten; und/oder
wobei die Steuereinheit (112) dazu eingerichtet ist, unter Berücksichtigung von Messwerten des wenigstens einen Sensors (148) die Füllhöhe des Schüttguts (102) zu ermitteln.

5. Füllstandmessgerät (100) nach einem der voranstehenden Ansprüche,
wobei die Steuereinheit (112) dazu eingerichtet ist, das Flugantriebsmodul (130) derart zu regeln, dass ein vorgegebener Abstand (260) des Füllstandmessgeräts (100) zur Oberfläche (103) des Schüttguts (102) entlang der Flugbahn (134) eingehalten wird; und
wobei die Steuereinheit (112) dazu eingerichtet ist, basierend auf einer Lageänderung des Füllstandmessgeräts (100) entlang der Flugbahn (134) den Füllhöhenwert des Schüttguts (102) zu ermitteln.

6. Füllstandmessgerät (100) nach einem der voranstehenden Ansprüche,
wobei die Steuereinheit (112) dazu eingerichtet ist, das Flugantriebsmodul (130) derart zu steuern, dass das Füllstandmessgerät (100) innerhalb vorbestimmter Koordinaten (Y_{MIN}, Y_{MAX}, X_{MIN}, X_{MAX}) die Füllhöhe des Schüttguts (102) ermittelt.

7. Füllstandmessgerät (100) nach einem der voranstehenden Ansprüche,
wobei die Steuereinheit (112) dazu eingerichtet ist, bei einer Lageänderung des Füllstandmessgeräts (100), eine aktuell ermittelte Füllhöhe zu verwerfen und basierend auf weiteren ermittelten Füllhöhen zu ersetzen.

8. Messanordnung (200) zum Bestimmen einer Füllhöhe eines Schüttguts (102), aufweisend:
ein Füllstandmessgerät (100) nach einem der voranstehenden Ansprüche; und
eine Basisstation (202) zur Kommunikation mit dem Füllstandmessgerät (100).

9. Messanordnung (200) nach Anspruch 8,
wobei das Füllstandmessgerät (100) einen Energiespeicher (144) zum Speichern elektrischer Energie aufweist;
wobei die Basisstation (202) ein Energieversorgungsmodul (212) aufweist; und
wobei die Basisstation (202) dazu eingerichtet ist, während eines Verharrens des Füllstandmessgeräts (100) an der Basisstation (202) den Energiespeicher (144) des Füllstandmessgeräts (100) zumindest teilweise mit elektrischer Energie zu füllen.

10. Messanordnung (200) nach einem der Ansprüche 8 oder 9,
wobei die Basisstation (202) ein Steuermodul (208) aufweist, welches dazu eingerichtet ist, die von dem Füllstandmessgerät (100) erfasste Füllhöhe zu verarbeiten, einen zeitlichen Ablauf von Messzyklen des Füllstandmessgeräts (100) zu regeln, einen Ladevorgang eines Energiespeichers (144) des Füllstandmessgeräts (100) zu regeln, eine Interaktion mit einem Benutzer über eine Benutzerschnittstelle zu koordinieren, eine Kommunikation mit dem Füllstandmessgerät (100) über ein Kommunikationsmodul (136) des Füllstandmessgeräts (100) bereitzustellen, und/oder die von dem Füllstandmessgerät (100) erfasste Füllhöhe an eine Leitstation zu übertragen.

11. Messanordnung (200) nach einem der Ansprüche 8 bis 10,
wobei ein Steuermodul (208) der Basisstation (202) und/oder die Steuereinheit (112) des Füllstandmessgeräts (100) dazu eingerichtet ist, wenigstens einen Kennwert zu ermitteln;
wobei der wenigstens eine Kennwert ein Element ausgewählt aus der Gruppe bestehend aus Volumen des Schüttguts, Tonnage des Schüttguts (102), Befüllgrad einer Schütthalde (107), mittlerer Füllhöhenwert des Schüttguts (102), Verlauf der Oberfläche (103) des Schüttguts (102) und Topologie der Oberfläche (103) des Schüttguts (102) ist.

12. Messanordnung (200) nach einem der Ansprüche 9 bis 11,
wobei die Messanordnung (200) dazu eingerichtet ist, Koordinaten (Y_{MIN}, Y_{MAX}, X_{MIN}, X_{MAX}) einer Schütthalde (107) festzulegen, innerhalb derer eine Füllhöhe mit dem Füllstandmessgerät (100) ermittelt wird, indem eine Standortbestimmungsvorrichtung entlang einer äußeren Begrenzung (109) der Schütthalde (107) bewegt wird;
indem eine Mehrzahl von geographischen Koordinaten entlang der Begrenzung (109) mit der Standortbestimmungsvorrichtung ermittelt wird; und
indem die Mehrzahl von geographischen Koordinaten in einer Speichervorrichtung hinterlegt wird.

13. Verfahren zum Ermitteln einer Füllhöhe eines Schüttguts (102) mit einem Füllstandmessgerät (100), welches eine Steuereinheit (112) und ein Flugantriebsmodul (130) zum Positionieren des Füllstandmessgeräts (100) oberhalb des Schüttguts (102) aufweist,
wobei das Füllstandmessgerät (100) ein Sende-Empfangsmodul (106) zum Aussenden eines Sendesignals und zum Empfangen eines an einer Oberfläche (103) des Schüttguts (102) reflektierten Signals aufweist;
das Verfahren aufweisend die Schritte:
Steuern und/oder Regeln des Flugantriebmoduls (130) durch die Steuereinheit (112) derart, dass das Füllstandmessgerät (100) entlang einer Flugbahn (134) eine Mehrzahl von Positionen oberhalb des Schüttguts (102) einnimmt; und
Ermitteln einer Füllhöhe des Schüttguts (102) an zumindest einem Teil der Mehrzahl von eingenommen Positionen,
**dadurch gekennzeichnet, dass**
das Sende-Empfangsmodul eine Antennenanordnung zum Aussenden und Empfangen eines radarbasierten Signals aufweist.

14. Programmelement, das, wenn es auf einer Steuereinheit (112) eines Füllstandmessgeräts (100) ausgeführt wird, das Füllstandmessgerät (100) anleitet, die Schritte des Verfahrens nach Anspruch 13 auszuführen.

15. Computerlesbares Medium, auf dem ein Programmelement nach Anspruch 14 gespeichert ist.

## Claims

1. Level measuring device (100) for determining a filling level of a bulk material (102) comprising:
a transmission-receiving module (106) for transmitting a transmission signal and for receiving a signal reflected at a surface (103) of the bulk material (102);
a control unit (112) which is configured to determine, based on the transmission signal and the reflected signal, a distance (116) of the level measuring device (100) to the surface (103) of the bulk material (102);
and
a flight drive module (130) for positioning the level measuring device (100) above the bulk material (102);
wherein the control unit (112) is configured to control the flight drive module (130) such that the level measuring device is positioned at a plurality of positions along a trajectory (134) above the bulk material (102); and
wherein the control unit (112) is configured to determine the filling level of the bulk material (102) at at least a part of the plurality of positions
**characterized in that**
the transmission-receiving module comprises an antenna arrangement to transmit and to receive a radar-based signal.

2. Level measuring device (100) according to claim 1, further comprising:
a communication module (136) with a communication interface (138) for a wireless communication of the level measuring device (100) with a base station (202);
wherein the control unit (112) is configured to transmit the filling level via the communication module (136) to the base station (202).

3. Level measuring device (100) according to claim 2,
wherein the level measuring device (100) is configured to receive via the communication interface (138) control signals from a base station (202).

4. Level measuring device (100) according to any of the preceding claims,
wherein the level measuring device (100) comprises at least one sensor (148) selected from the group consisting of: position acquisition sensor, tilt sensor, accelerometer, pressure sensor, distance sensor and proximity sensor,
wherein the control unit (112) is configured to process measuring values of the at least one sensor (148); and/or
wherein the control unit (112) is configured to determine the filling level of the bulk material (102) taking into account the measuring values of the at least one sensor (148).

5. Level measuring device (100) according to any of the preceding claims,
wherein the control unit (112) is configured to control the flight drive module (130) such that a predetermined distance (260) between the level measuring device (100) and the surface (103) of the bulk material (102) is maintained along the trajectory (134), and
wherein the control unit (112) is configured to determine, based on a position change of the level measuring device (100) along the trajectory (134), the filling level of the bulk material (102).

6. Level measuring device (100) according to any of the preceding claims,
wherein the control unit (112) is configured to control the flight drive module such that the level measuring device (100) determines the filling level of the bulk material (102) within predetermined coordinates (Y_{MIN}, Y_{MAX}, X_{MIN}, X_{MAX}).

7. Level measuring device (100) according to any of the preceding claims,
wherein the control unit (112) is configured to discard a currently determined filling level and to replace it based on a further determined filling level upon a position change of the level measuring device (100).

8. Measuring arrangement (200) for determining a filling level of a bulk material (102), comprising:
a level measuring device (100) according to any of the preceding claims, and
a base station (202) for communication with the level measuring device (100).

9. Measuring arrangement (200) according to claim 8,
wherein the level measuring device (100) comprises an energy storage (144) for storing electrical energy,
wherein the base station (202) comprises an energy supply module (212) and wherein the base station (202) is configured to fill the energy storage (144) of the level measuring device (100) at least partly with electrical energy when the level measuring device (100) is at the base station (202).

10. Measuring arrangement (200) according to any of the claims 8 or 9,
wherein the base station (202) comprises a control module (208) which is configured to process a filling level determined by the level measuring device (100), to control a time sequence of measurement cycles of the level measuring device (100), to control a charging of an energy storage (144) of the level measuring device (100), to coordinate an interaction with a user via a user interface, to provide a communication with the level measuring device (100) via a communication module (136) of the level measuring device (100) and/or to transmit a filling level determined by the level measuring device (100) to a control station.

11. Measuring arrangement (200) according to any of the claims 8 to 10,
wherein the control module (208) of the base station (202) and/or the control unit (112) of the level measuring device (100) is configured to determine at least one specific value,
wherein the at least one specific value is an element selected from the group consisting of volume of the bulk material, tonnage of the bulk material (102), filling level of a heap (107), average fill level value of the bulk material (102), course of the surface (103) of the bulk material (102) and topology of the surface (103) of the bulk material (102).

12. Measuring arrangement (200) according to any of the claims 9 to 11,
wherein the measuring arrangement (200) is configured to define coordinates (Y_{MIN}, Y_{MAX}, X_{MIN}, X_{MAX}) of a heap (107) within which a filling level with the level measuring device (100) is determined, based moving a position acquisition device along an outer boundary (109) of the heap (107),
based on determining a plurality of geographical coordinates along the outer boundary (109) with the measuring device,
and based on storing the plurality of geographical coordinates in a storage device.

13. Method for determining a filling level of a bulk material (102) with a level measuring device (100) which comprises a control unit (112) and a flight drive module (130) for positioning the level measuring device (100) above the bulk material (102),
wherein the level measuring device (100) comprises a transmission-receiving module (106) for transmitting a transmission signal and for receiving a signal reflected at a surface (103) of the bulk material (102),
the method comprising the steps:
controlling and/or steering the flight drive module (130) by the control unit (112) such that the level measuring device (100) is positioned at a plurality of positions above the bulk material (102) along a trajectory (134) and
determining a fill level of the bulk material (102) at at least a part of the plurality of positions;
**characterized in that**
the transmission-receiving module comprises an antenna arrangement for transmitting and receiving a radar-based signal.

14. Program element, which, when executed on a control unit (112) of a level measuring device (100), instructs the level measuring device (100) to perform the steps of the method according to claim 13.

15. Computer readable medium, on which a program element according to claim 14 is stored.

## Revendications

1. Appareil de mesure de niveau de remplissage (100) pour déterminer une hauteur de remplissage d'un matériau en vrac (102), comportant :
un module d'émission-réception (106) pour émettre un signal d'émission et recevoir un signal réfléchi sur une surface (103) du matériau en vrac (102),
une unité de commande (112) configurée pour déterminer, sur la base du signal d'émission et du signal réfléchi, une distance (116) entre l'appareil de mesure de niveau de remplissage (100) et la surface (103) du matériau en vrac (102), et
un module d'entraînement aérien (130) pour positionner l'appareil de mesure de niveau de remplissage (100) au-dessus du matériau en vrac (102),
dans lequel l'unité de commande (112) est configurée pour réguler le module d'entraînement aérien (130) de sorte que l'appareil de mesure de niveau de remplissage (100) occupe le long d'une trajectoire (134) une pluralité de positions au-dessus du matériau en vrac (102), et
dans lequel l'unité de commande (112) est configurée pour déterminer la hauteur de remplissage du matériau en vrac (102) sur au moins une partie de la pluralité de positions occupées,
**caractérisé en ce que** le module d'émission-réception comporte un agencement à antenne pour émettre et recevoir un signal radar.

2. Appareil de mesure de niveau de remplissage (100) selon la revendication 1, comportant en outre :
un module de communication (136) avec une interface de communication (138) pour établir une communication sans fil entre l'appareil de mesure de niveau de remplissage (100) et une station de base (202),
dans lequel l'unité de commande (112) est configurée pour transmettre à la station de base (202) la hauteur de remplissage déterminée via le module de communication (136).

3. Appareil de mesure de niveau de remplissage (100) selon la revendication 2,
dans lequel l'appareil de mesure de niveau de remplissage (100) est configuré pour recevoir des instructions de commande d'une station de base (102) par l'intermédiaire de l'interface de communication (138).

4. Appareil de mesure de niveau de remplissage (100) selon l'une des revendications précédentes,
dans lequel l'appareil de mesure de niveau de remplissage (100) comporte au moins un capteur (148) choisi parmi le groupe constitué d'un capteur de localisation, d'un capteur d'inclinaison, d'un capteur d'accélération, d'un capteur de pression, d'un capteur de distance et d'un capteur de proximité,
dans lequel l'unité de commande (112) est configurée pour traiter des valeurs de mesure du au moins un capteur (148), et/ou
dans lequel l'unité de commande (112) est configurée pour déterminer la hauteur de remplissage du matériau en vrac (102) en tenant compte de valeurs de mesure du au moins un capteur (148).

5. Appareil de mesure de niveau de remplissage (100) selon l'une des revendications précédentes,
dans lequel l'unité de commande (112) est configurée pour réguler le module d'entraînement aérien (130) de sorte qu'une distance prédéfinie (260) entre l'appareil de mesure de niveau de remplissage (100) et la surface (103) du matériau en vrac (102) est maintenue le long de la trajectoire (134), et
dans lequel l'unité de commande (112) est configurée pour déterminer, sur la base d'une variation de position de l'appareil de mesure de remplissage de niveau (100) le long de la trajectoire (134), la valeur de hauteur de remplissage du matériau en vrac (102).

6. Appareil de mesure de niveau de remplissage (100) selon l'une des revendications précédentes,
dans lequel l'unité de commande (112) est configurée pour commander le module d'entraînement aérien (130) de sorte que l'appareil de mesure de niveau de remplissage (100) détermine la hauteur de remplissage du matériau en vrac (102) dans les limites de coordonnées (Y_{MIN}, Y_{MAX}, X_{MIN}, X_{MAX}) prédéterminées.

7. Appareil de mesure de niveau de remplissage (100) selon l'une des revendications précédentes,
dans lequel l'unité de commande (112) est configurée pour rejeter une hauteur de remplissage actuellement déterminée en cas de variation de position de l'appareil de mesure de niveau de remplissage (100) et pour la remplacer sur la base d'autres hauteurs de remplissage déterminées.

8. Système de mesure (200) pour déterminer une hauteur de remplissage d'un matériau en vrac (102), comportant :
un appareil de mesure de niveau de remplissage (100) selon l'une des revendications précédentes, et
une station de base (202) pour communiquer avec l'appareil de mesure de niveau de remplissage (100).

9. Système de mesure (200) selon la revendication 8,
dans lequel l'appareil de mesure de niveau de remplissage (100) comporte un accumulateur d'énergie (144) pour accumuler de l'énergie électrique,
dans lequel la station de base (202) comporte un module d'alimentation en énergie (212), et
dans lequel la station de base (202) est configurée pour alimenter l'accumulateur d'énergie (144) de l'appareil de mesure de niveau de remplissage (100) au moins en partie avec de l'énergie électrique, lorsque l'appareil de mesure de niveau de remplissage (100) est immobile sur la station de base (202).

10. Système de mesure (200) selon l'une des revendications 8 ou 9,
dans lequel la station de base (202) comporte un module de commande (208) qui est configuré pour traiter des hauteurs de remplissage acquises par l'appareil de mesure de niveau de remplissage (100), pour réguler une séquence temporelle de cycles de mesure de l'appareil de mesure de niveau de remplissage (100), pour réguler une opération de charge d'un accumulateur d'énergie (144) de l'appareil de mesure de niveau de remplissage (100), pour coordonner une interaction avec un utilisateur via une interface utilisateur, pour établir une communication avec l'appareil de mesure de niveau de remplissage (100) via un module de communication (136) de l'appareil de mesure de niveau de remplissage (100) et/ou pour transmettre à une station centrale la hauteur de remplissage acquise par l'appareil de mesure de niveau de remplissage (100).

11. Système de mesure (200) selon l'une des revendications 8 à 10,
dans lequel un module de commande (208) de la station de base (202) et/ou l'unité de commande (112) de l'appareil de mesure de niveau de remplissage (100) est configuré pour déterminer au moins une valeur caractéristique,
dans lequel la au moins une valeur caractéristique est un élément choisi parmi le groupe constitué de volumes du matériau en vrac, d'un tonnage du matériau en vrac (102), d'un taux de remplissage d'un tas de matériau en vrac (107), d'une valeur moyenne de hauteur de remplissage du matériau en vrac (102), d'une allure de la surface (103) du matériau en vrac (102) et d'une topologie de la surface (103) du matériau en vrac (102).

12. Système de mesure (200) selon l'une des revendications 9 à 11,
dans lequel le système de mesure (200) est configuré pour définir des coordonnées (Y_{MIN}, Y_{MAX}, X_{MIN}, X_{MAX}) d'un tas de matériau en vrac (107) dans les limites desquelles une hauteur de remplissage est déterminée avec l'appareil de mesure de niveau de remplissage (100), dans lequel un dispositif de localisation est déplacé le long d'une délimitation extérieure (109) du tas de matériau en vrac (107),
dans lequel une pluralité de coordonnées géographiques est déterminée le long de la délimitation (109) avec le dispositif de localisation, et
dans lequel la pluralité de coordonnées géographiques est stockée dans un dispositif de stockage.

13. Procédé pour déterminer une hauteur de remplissage d'un matériau en vrac (102) avec un appareil de mesure de niveau de remplissage (100) comportant une unité de commande (112) et un module d'entraînement aérien (130) pour positionner l'appareil de mesure de niveau de remplissage (100) au-dessus du matériau en vrac (102),
dans lequel l'appareil de mesure de niveau de remplissage (100) comporte un module d'émission-réception (106) pour émettre un signal d'émission et pour recevoir un signal réfléchi sur une surface (103) du matériau en vrac (102),
le procédé comportant les étapes consistant à :
commander et/ou réguler le module d'entraînement aérien (130) par l'unité de commande (112) de sorte que l'appareil de mesure de niveau de remplissage (100) occupe une pluralité de positions au-dessus du matériau en vrac (102) le long de la trajectoire (134), et
déterminer une hauteur de remplissage du matériau en vrac (102) sur au moins une partie de la pluralité de positions occupées,
**caractérisé en ce que** le module d'émission-réception comporte un agencement à antenne pour émettre et recevoir un signal radar.

14. Elément de programme qui, lorsqu'il est exécuté sur une unité de commande (112) d'un appareil de mesure de niveau de remplissage (100), amène l'appareil de mesure de niveau de remplissage (100) à exécuter les étapes du procédé de la revendication 13.

15. Support lisible par ordinateur sur lequel est enregistré un élément de programme selon la revendication 14.
